# EUROPEAN PATENT APPLICATION

(11) **EP 4 832 196 A1**
(43) Date of publication of application: **28.10.2026**
(21) Application number: 25751768.0
(22) Date of filing: 28.03.2025
(51) Int. Cl.: H01M 50/242, H01M 50/244

(54) **BATTERY AND ELECTRIC DEVICE**

(30) Priority: 06.02.2024 CN 202420286218 U
(71) Applicant: Contemporary Amperex Technology Co., Limited, Ningde, Fujian 352100 (CN)
(72) Inventor: MIAO, Huimin, Ningde, Fujian 352100 (CN); HOU, Yujia, Ningde, Fujian 352100 (CN); KE, Qingpeng, Ningde, Fujian 352100 (CN)
(74) Representative: Kraus & Lederer PartGmbB
(86) International application number: PCT/CN2025/085640
(87) International publication number: WO 2025/168159

(57) **Abstract**

A battery (100) and an electric device. The battery (100) comprises a battery cell (20), a box (10) and a protective plate (30), wherein an electrode terminal (201) is provided on one side of the battery cell (20) in a first direction (X); the box (10) is provided with an accommodating space (103) for accommodating the battery cell (20); and the protective plate (30) is arranged in the accommodating space (103) and is located on one side of the battery cell (20) in the first direction (X), and the protective plate (30) comprises a main body portion (301) and a cushioning portion (302), which are connected to each other, the cushioning portion (302) protruding from the side of the main body portion (301) facing the battery cell (20) and being opposite the electrode terminal (201) in the first direction (X). In the above structure, the cushioning portion (302) of the protective plate (30) protrudes from the side of the main body portion (301) facing the battery cell (20) and is opposite the electrode terminal (201) in the first direction (X), so that when the protective plate (30) is impacted and deforms, the cushioning portion (302) can come into contact with the electrode terminal (201) of the battery cell (20) having a good strength, and the cushioning portion (302) can cushion the action forces between the protective plate (30) and the battery cell (20), causing the electrode terminal (201) of the battery cell (20) to be less prone to deforming, thereby facilitating an improvement in the impact resistance of the battery (100), as well as improving the reliability of the battery (100).

## Description

### CROSS-REFERENCE TO RELATED APPLICATIONS

This application claims priority to Chinese Patent Application No. 202420286218.7 filed on February 06, 2024 and entitled "BATTERY AND ELECTRIC APPARATUS", which is incorporated herein by reference in its entirety.

### TECHNICAL FIELD

This application relates to the technical field of batteries, and in particular to a battery and an electric apparatus.

### BACKGROUND

Batteries have the advantages of high specific energy and high power density, and are widely used in electronic devices and vehicles, such as mobile phones, notebook computers, battery cars, electric vehicles, electric airplanes, electric ships, and electric tools.

With the continuous expansion of the application range of batteries in various fields, the reliability of batteries has received increasing attention from those skilled in the art.

### SUMMARY

In view of the above problems, this application provides a battery and an electric apparatus. The battery has good impact resistance, which is beneficial to improving the reliability of the battery.

According to a first aspect, some embodiments of this application provide a battery. The battery includes a battery cell, a box, and a protective plate. One side of the battery cell along a first direction is provided with an electrode terminal. The box is provided with an accommodating space for accommodating the battery cell. The protective plate is disposed in the accommodating space and located on the side of the battery cell along the first direction. The protective plate includes a main body portion and a buffer portion that are connected to each other. The buffer portion protrudes from a side of the main body portion facing the battery cell and is opposite to the electrode terminal along the first direction.

In the above structure, since the buffer portion in the protective plate protrudes from the side of the main body portion facing the battery cell and is opposite to the electrode terminal along the first direction, when the protective plate is impacted and deformed, the buffer portion can come into contact with the electrode terminal of the battery cell with better strength. Moreover, the buffer portion can buffer the force between the protective plate and the battery cell, so that the electrode terminal of the battery cell is less likely to deform, which is beneficial to improving the impact resistance of the battery, thereby improving the reliability of the battery.

According to the battery provided in some embodiments of this application, the side of the battery cell along the first direction is provided with a pressure relief mechanism, and the pressure relief mechanism is opposite to the main body portion along the first direction, so that the pressure relief mechanism enables communication between the interior of the battery cell and the gap between the battery cell and the main body portion, which facilitates the discharge of substances inside the battery cell.

According to the battery provided in some embodiments of this application, the protective plate includes multiple buffer portions spaced apart along a second direction, and the second direction is perpendicular to the first direction. The side of the battery cell along the first direction is provided with a pressure relief mechanism, and the pressure relief mechanism corresponds to a gap between two adjacent buffer portions, so that the gap between two adjacent buffer portions can provide avoidance space for the pressure relief mechanism to facilitate the action of the pressure relief mechanism.

According to the battery provided in some embodiments of this application, the protective plate is provided with reinforcing ribs, and the reinforcing ribs are connected to two adjacent buffer portions, which not only enables the reinforcing ribs to better strengthen the structure of the protective plate, but also enables the reinforcing ribs to fully utilize the space between two adjacent buffer portions.

According to the battery provided in some embodiments of this application, the battery further includes a busbar member, and at least part of the busbar member is located between the buffer portion and the electrode terminal and is connected to the electrode terminal, so that the buffer portion can abut against the busbar member. The busbar member can enhance the structural strength of the contact position between the buffer portion and the battery cell, which is beneficial to reducing the deformation at the electrode terminal under impact, and is beneficial to improving the impact resistance of the battery, thereby improving the reliability of the battery.

According to the battery provided in some embodiments of this application, the battery further includes an isolation plate, and the isolation plate is located on a side of the protective plate facing the battery cell and separates the battery cell from the protective plate. The busbar member is fixed to the isolation plate, so that when the protective plate is impacted and deformed, the buffer portion can abut against the isolation plate, which can reduce the impact on the battery cell and is beneficial to reducing the deformation of the battery cell.

According to the battery provided in some embodiments of this application, the battery further includes a pressing strip, and the pressing strip is connected between the protective plate and the isolation plate, so that the protective plate can support and fix the isolation plate through the pressing strip, so that the battery forms an overall structure.

According to the battery provided in some embodiments of this application, the pressing strip is bonded to the protective plate, so that the pressing strip can be conveniently connected to the protective plate, which is beneficial to improving the assembly efficiency of the battery and improving production efficiency.

According to the battery provided in some embodiments of this application, at least one buffer portion includes at least two protrusion portions, the at least two protrusion portions are spaced apart, and the pressing strip is located in the gap between two adjacent protrusion portions in the buffer portion, so that the pressing strip does not interfere with the reinforcing ribs, which facilitates the provision of the pressing strip.

According to the battery provided in some embodiments of this application, the surface of the protective plate facing the isolation plate is convexly provided with a glue limiting boss, and the glue limiting boss is located between two adjacent protrusion portions in the buffer portion and abuts against the pressing strip so that a glue accommodating gap for accommodating adhesive glue is formed between the pressing strip and the protective plate, and the adhesive glue has sufficient thickness to firmly bond the pressing strip and the protective plate.

According to the battery provided in some embodiments of this application, the battery further includes a reinforcing beam, and the reinforcing beam is connected to the protective plate and the box, so that the overall strength of the battery can be enhanced.

According to the battery provided in some embodiments of this application, the protective plate includes two plate bodies and a buffer layer disposed between the two plate bodies, the buffer layer is an elastic structural layer, and the plate bodies are composite material parts. The plate body includes a connection region and a buffer region, the connection regions of the two plate bodies are stacked and connected, and the buffer layer is located between the buffer regions of the two plate bodies. The main body portion includes the connection regions of the two plate bodies, and the buffer portion includes the buffer regions of the two plate bodies and the buffer layer.

According to the battery provided in some embodiments of this application, the two plate bodies are of an integrally formed structure, so that the protective plate has good structural integrity, which is beneficial to enhancing the structural strength of the protective plate.

According to a second aspect, some embodiments of this application provide an electric apparatus, the electric apparatus includes the battery provided by the above technical solution, and the battery is configured to provide electric energy.

The technical solutions provided by the embodiments of the present disclosure at least bring the following beneficial effects:

This application provides a battery. The battery includes a battery cell, a box, and a protective plate. One side of the battery cell along a first direction is provided with an electrode terminal. The box is provided with an accommodating space for accommodating the battery cell. The protective plate is disposed in the accommodating space and located on the side of the battery cell along the first direction. The protective plate includes a main body portion and a buffer portion that are connected to each other. The buffer portion protrudes from a side of the main body portion facing the battery cell and is opposite to the electrode terminal along the first direction. In the above structure, since the buffer portion in the protective plate protrudes from the side of the main body portion facing the battery cell and is opposite to the electrode terminal along the first direction, when the protective plate is impacted and deformed, the buffer portion can come into contact with the electrode terminal of the battery cell with better strength. Moreover, the buffer portion can buffer the force between the protective plate and the battery cell, so that the electrode terminal of the battery cell is less likely to deform, which is beneficial to improving the impact resistance of the battery, thereby improving the reliability of the battery.

The above description is only an overview of the technical solutions of this application. In order to more clearly understand the technical means of this application, it can be implemented in accordance with the content of the specification. In order to make the above and other purposes, features, and advantages of this application more obvious and understandable, the specific embodiments of this application are specifically listed below.

### BRIEF DESCRIPTION OF DRAWINGS

By reading the detailed description of the preferred embodiments below, various other advantages and benefits will become clear to those of ordinary skill in the art. The drawings are only used for the purpose of illustrating the preferred embodiments and are not considered to be limitations on this application. Moreover, the like components are represented by the like reference symbols throughout the drawings. In the drawings:
FIG. 1 is a schematic structural diagram of a vehicle provided in some embodiments of this application;
FIG. 2 is an exploded view of a partial structure of a battery provided in some embodiments of this application;
FIG. 3 is a schematic structural diagram of a battery cell in a battery provided in some embodiments of this application;
FIG. 4 is a schematic structural diagram of a protective plate in a battery provided in some embodiments of this application;
FIG. 5 is a schematic structural diagram at a protective plate in a battery provided in some embodiments of this application;
FIG. 6 is an enlarged view of position A in FIG. 5; and
FIG. 7 is a cross-sectional view of a protective plate in a battery provided in some embodiments of this application.

The reference signs of the drawings in the specific embodiments are as follows:
10. box; 101. first box body; 102. second box body; 103. accommodating space; 20. battery cell; 201. electrode terminal; 202. pressure relief mechanism; 30. protective plate; 301. main body portion; 302. buffer portion; 3021. protrusion portion; 303. reinforcing rib; 304. glue limiting boss; 305. plate body; 3051. connection region; 3052. buffer region; 306. buffer layer; 40. busbar member; 50. isolation plate; 60. pressing strip; 601. glue accommodating gap; 70. reinforcing beam; 1000. vehicle; 100. battery; 200. controller; 300. motor; X. first direction; Y. second direction; and Z. third direction.

### DESCRIPTION OF EMBODIMENTS

The embodiments of the technical solutions of this application will be described in detail below in conjunction with the drawings. The following embodiments are only used to more clearly illustrate the technical solutions of this application, and are therefore only used as examples and cannot be used to limit the protection scope of this application.

It should be noted that, unless otherwise specified, the technical terms or scientific terms used in the embodiments of this application should have the usual meanings understood by those skilled in the art to which the embodiments of this application belong.

In the description of the embodiments of this application, the orientation or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationships shown in the drawings, and are only for the convenience of describing the embodiments of this application and simplifying the description, and do not indicate or imply that the means or element referred to must have a specific orientation, be constructed and operated in a specific orientation, and therefore cannot be understood as a limitation on the embodiments of this application.

In addition, the technical terms "first", "second", and the like are only used for descriptive purposes and cannot be understood as indicating or implying relative importance or implicitly indicating the number of technical features indicated. In the description of the embodiments of this application, "multiple" means two or more, unless otherwise clearly and specifically limited.

In the description of the embodiments of this application, unless otherwise clearly specified and limited, the technical terms "mounting", "connecting", "join", "fixing", and the like should be understood in a broad sense. For example, they may be a fixed connection, a detachable connection, or an integral connection; they may be a mechanical connection or an electrical connection; they may be a direct connection or an indirect connection through an intermediate medium; or they may be the internal communication of two elements or the interaction relationship between two elements. For those of ordinary skill in the art, the specific meanings of the above terms in the embodiments of this application can be understood according to specific circumstances.

In the description of the embodiments of this application, unless otherwise clearly specified and limited, the first feature being "on" or "under" the second feature may mean that the first and second features are in direct contact, or the first and second features are in indirect contact through an intermediate medium. Moreover, the first feature being "above", "over", and "on" the second feature may mean that the first feature is directly above or obliquely above the second feature, or merely indicates that the first feature is horizontally higher than the second feature. The first feature being "below", "under", and "beneath" the second feature may mean that the first feature is directly below or obliquely below the second feature, or merely indicates that the first feature is horizontally lower than the second feature.

At present, from the perspective of market development, the application of batteries is becoming increasingly extensive. Batteries are not only used in energy storage power systems such as hydropower, thermal power, wind power, and solar power stations, but are also widely used in electric transportation vehicles such as electric bicycles, electric motorcycles, and electric vehicles, as well as in many fields such as aerospace. With the continuous expansion of battery application fields, the market demand is also continuously increasing.

The battery mentioned in the embodiments of this application refers to a single physical module that includes one or more battery cells to provide higher voltage and capacity.

With the continuous expansion of the application range of batteries in various fields, people are paying more and more attention to the reliability of batteries. How to improve the reliability of batteries has become an important research direction for those skilled in the art.

As a device that provides electric energy in an electric apparatus, a battery has the characteristics of high specific energy and high power density, and thus is prone to thermal runaway or even explosion and other dangers when subjected to impact and damage.

In order to enhance the impact resistance of the battery and improve the reliability of the battery, some embodiments of this application provide a battery. The battery includes a battery cell, a box, and a protective plate. One side of the battery cell along a first direction is provided with an electrode terminal. The box is provided with an accommodating space for accommodating the battery cell. The protective plate is disposed in the accommodating space and located on the side of the battery cell along the first direction. The protective plate includes a main body portion and a buffer portion that are connected to each other. The buffer portion protrudes from a side of the main body portion facing the battery cell and is opposite to the electrode terminal along the first direction. In the above structure, since the buffer portion in the protective plate protrudes from the side of the main body portion facing the battery cell and is opposite to the electrode terminal along the first direction, when the protective plate is impacted and deformed, the buffer portion can come into contact with the electrode terminal of the battery cell with better strength. Moreover, the buffer portion can buffer the force between the protective plate and the battery cell, so that the electrode terminal of the battery cell is less likely to deform, which is beneficial to improving the impact resistance of the battery, thereby improving the reliability of the battery.

The electric apparatus may be a vehicle, a mobile phone, a portable device, a notebook computer, a ship, a spacecraft, an electric toy, an electric tool, and the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes airplanes, rockets, space shuttles, spacecraft, and the like; the electric toys include fixed or mobile electric toys, such as game consoles, electric car toys, electric ship toys, electric airplane toys, and the like; and the electric tools include metal cutting electric tools, grinding electric tools, assembly electric tools, and railway electric tools, such as electric drills, electric grinders, electric wrenches, electric screwdrivers, electric hammers, impact drills, concrete vibrators, electric planers, and the like. The embodiments of this application do not impose special restrictions on the above electric apparatuses.

For the convenience of description, the following embodiments are described by taking an electric apparatus according to an embodiment of this application as a vehicle as an example.

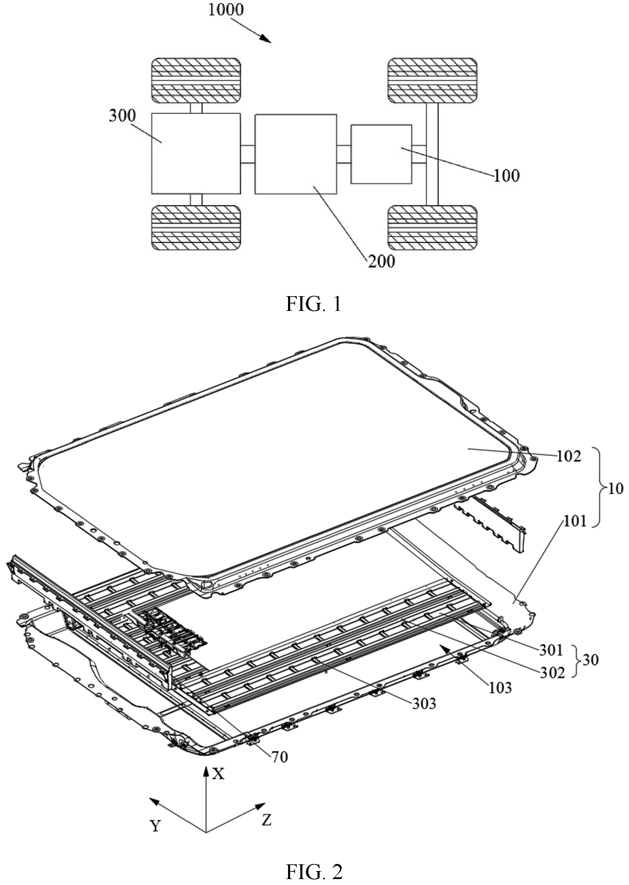

Refer to FIG. 1. FIG. 1 is a schematic structural diagram of a vehicle 1000 provided in some embodiments of this application. The vehicle 1000 may be a fuel vehicle, a gas vehicle, or a new energy vehicle, and the new energy vehicle may be a pure electric vehicle, a hybrid vehicle, an extended-range vehicle, or the like. A battery 100 is disposed inside the vehicle 1000, and the battery 100 may be disposed at the bottom, front, or rear of the vehicle 1000. The battery 100 may be used to supply power to the vehicle 1000. For example, the battery 100 may be used as an operating power source for the vehicle 1000. The vehicle 1000 may further include a controller 200 and a motor 300. The controller 200 is configured to control the battery 100 to supply power to the motor 300, for example, to meet the working power requirements during starting, navigation, and driving of the vehicle 1000.

In some embodiments of this application, the battery 100 can be used not only as an operating power source for the vehicle 1000, but also as a driving power source for the vehicle 1000, replacing or partially replacing fuel or natural gas to provide driving power for the vehicle 1000.

Some embodiments of this application provide a battery 100. As shown in FIG. 2, the battery 100 includes a battery cell 20 (not shown in the figure), a box 10, and a protective plate 30. One side of the battery cell 20 along a first direction X is provided with an electrode terminal 201. The box 10 is provided with an accommodating space 103 for accommodating the battery cell 20. The protective plate 30 is disposed in the accommodating space 103 and is located on the side of the battery cell 20 along the first direction X. The protective plate 30 includes a main body portion 301 and a buffer portion 302 that are connected to each other. The buffer portion 302 protrudes from a side of the main body portion 301 facing the battery cell 20 and is opposite to the electrode terminal 201 along the first direction X.

The battery cell 20 may be a secondary battery cell 20. The secondary battery cell 20 refers to a battery cell 20 that can be recharged after the battery cell 20 is discharged to activate the active material and continue to be used. The battery cell 20 may be a lithium-ion battery cell, a sodium-ion battery cell, a sodium-lithium-ion battery cell, a lithium-metal battery cell, a sodium-metal battery cell, a lithium-sulfur battery cell, a magnesium-ion battery cell, a nickel-hydrogen battery cell, a nickel-cadmium battery cell, a lead-acid battery cell, or the like.

For example, the battery cell 20 may be a cylindrical battery cell, a prismatic battery cell, a pouch battery cell, or a battery cell 20 of other shapes. The prismatic battery cell includes a square-shell battery cell, a blade-shaped battery cell, and a multi-prism battery cell. The multi-prism battery cell is, for example, a hexagonal-prism battery cell.

When the battery 100 includes multiple battery cells 20, the multiple battery cells 20 are disposed and fixed to form a battery module.

The electrode terminal 201 may be a component provided on the battery cell 20 for electrically connecting with a component outside the battery cell 20, so that the battery cell 20 can be charged and discharged. The electrode terminal 201 may include but is not limited to a columnar structure, and those skilled in the art may set it according to actual conditions.

The electrode terminal 201 is disposed on one side of the battery cell 20 in the first direction X, so that components outside the battery cell 20 can be disposed on one side of the battery cell 20 in the first direction X. For example, the electrode terminal 201 is disposed protruding from the battery cell 20 along the first direction X, so that an electric apparatus or a charging apparatus outside the battery cell 20 can be conveniently connected to the electrode terminal 201.

The box 10 may be a component for providing the accommodating space 103. The accommodating space 103 is used to accommodate components located inside the battery 100, such as the battery cell 20, wiring harnesses, and circuit boards.

The protective plate 30 may be a plate-shaped component with protective capability for protecting the battery 100. By disposing the protective plate 30 in the accommodating space 103 and positioning the protective plate 30 between the box 10 and the battery cell 20, the impact received by the box 10 can be transmitted to the battery cell 20 only after passing through the protective plate 30. By disposing the protective plate 30 on one side of the battery cell 20 along the first direction X, the electrode terminal 201 and the protective plate 30 are located on the same side of the battery cell 20, which facilitates the contact between the electrode terminal 201 and the protective plate 30. The first direction X may be the thickness direction of the protective plate 30.

The main body portion 301 may be the main structure of the protective plate 30, which may extend along the extending direction of the side surface of the battery cell 20, so that the protective plate 30 can have a larger area located between the box 10 and the battery cell 20, thereby providing a better protective effect.

The buffer portion 302 may be a structure provided on the protective plate 30 for buffering the impact force between the protective plate 30 and the battery cell 20. By making the buffer portion 302 protrude from the side of the main body portion 301 facing the battery cell 20, the buffer portion 302 is closer to the battery cell 20 than the main body portion 301, so that when the battery 100 is impacted, the buffer portion 302 can come into contact with the battery cell 20 and buffer the force between the protective plate 30 and the battery cell 20. At the same time, the buffer portion 302 protrudes from the side of the main body portion 301 facing the battery cell 20, which also enables a gap to be formed between the battery cell 20 and the main body portion 301, which can provide a deformation space for the bottom plate.

Since the electrode terminal 201 of the battery cell 20 needs to be connected to an external device, it usually has high structural strength. The buffer portion 302 is disposed opposite to the electrode terminal 201 along the first direction X, so that the buffer portion 302 can come into contact with the electrode terminal 201 of the battery cell 20, and the contact position (at the electrode terminal 201 of the battery cell 20) is less likely to deform.

In the above structure, since the buffer portion 302 in the protective plate 30 protrudes from the side of the main body portion 301 facing the battery cell 20 and is opposite to the electrode terminal 201 along the first direction X, when the protective plate 30 is impacted and deformed, the buffer portion 302 can come into contact with the electrode terminal 201 of the battery cell 20 with better strength. Moreover, the buffer portion 302 can buffer the force between the protective plate 30 and the battery cell 20, so that the electrode terminal 201 of the battery cell 20 is less likely to deform, which is beneficial to improving the impact resistance of the battery 100, thereby improving the reliability of the battery 100.

In some embodiments, the box 10 may include a first box body 101 and a second box body 102. The first box body 101 and the second box body 102 fit each other to define an accommodating space 103 for accommodating components such as the battery cell 20, wiring harnesses, and circuit boards. The first box body 101 and the second box body 102 may have various shapes, such as a cuboid or a cylinder. For example, the first box body 101 may be a hollow structure with one side open, and the second box body 102 may also be a hollow structure with one side open. The open side of the second box body 102 covers the open side of the first box body 101 to form the box 10 with the accommodating space 103.

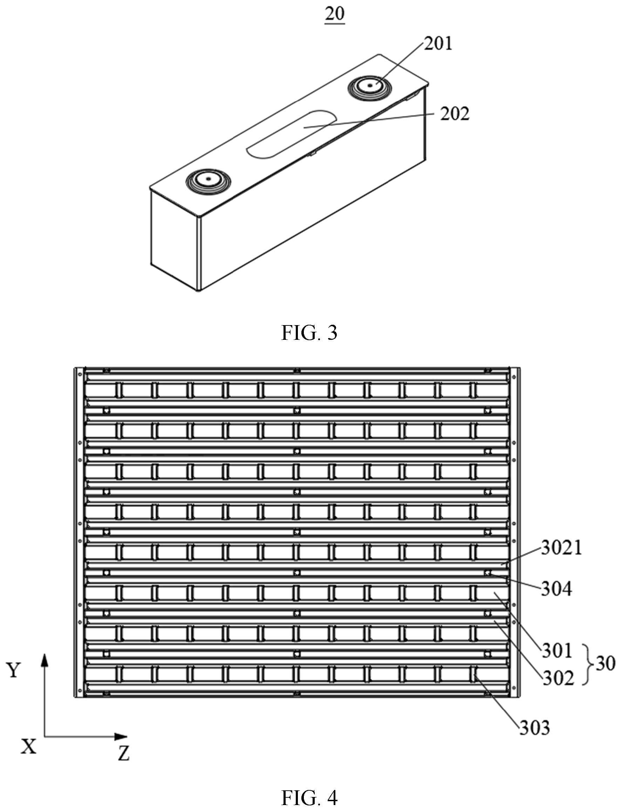

In some embodiments, as shown in FIG. 3, the side of the battery cell 20 along the first direction X is provided with a pressure relief mechanism 202, and the pressure relief mechanism 202 is opposite to the main body portion 301 along the first direction X.

The pressure relief mechanism 202 may be a mechanism provided on the battery cell 20 that can discharge substances in the box 10 to the outside of the box 10, which can reduce the pressure inside the box 10 and reduce the possibility of explosion of the battery 100. The pressure relief mechanism 202 may include pressure relief components such as pressure relief nails and explosion-proof valves provided on the battery cell 20. When the pressure inside the battery cell 20 reaches or exceeds a preset value, the pressure relief components can be opened to achieve communication between the interior of the battery cell 20 and the exterior of the battery cell 20 and discharge the relief substances. The pressure relief mechanism 202 may also include a weak structure formed on the housing of the battery cell 20. The structural strength of the weak structure is lower than that of the surrounding housing. When the pressure inside the battery cell 20 reaches or exceeds a preset value, the weak structure can rupture to achieve communication between the interior of the battery cell 20 and the exterior of the battery cell 20 and discharge the relief substances.

By disposing the pressure relief mechanism 202 on one side of the battery cell 20 along the first direction X and making the pressure relief mechanism 202 opposite to the main body portion 301 along the first direction X, the pressure relief mechanism 202 enables communication between the interior of the battery cell 20 and the gap between the battery cell 20 and the main body portion 301, which facilitates the discharge of substances inside the battery cell 20.

In some embodiments, the protective plate 30 includes multiple buffer portions 302 spaced apart along a second direction Y, and the second direction Y is perpendicular to the first direction X. The side of the battery cell 20 along the first direction X is provided with a pressure relief mechanism 202, and the pressure relief mechanism 202 corresponds to a gap between two adjacent buffer portions 302.

By providing multiple buffer portions 302 and spacing the multiple buffer portions 302 along the second direction Y, a gap can be formed between the buffer portions 302. By disposing the pressure relief mechanism 202 on one side of the battery cell 20 along the first direction X and making the pressure relief mechanism 202 correspond to the gap between two adjacent buffer portions 302, the gap between two adjacent buffer portions 302 can provide avoidance space for the pressure relief mechanism 202 to facilitate the action of the pressure relief mechanism 202.

The second direction Y is configured to be perpendicular to the first direction X, so that the multiple buffer portions 302 can be disposed on the side surface of the protective plate 30 perpendicular to the first direction X, which makes the provision of the buffer portions 302 convenient. For example, the buffer portion 302 is disposed extending along a third direction Z. The third direction Z may be a direction perpendicular to the second direction Y on the side surface perpendicular to the first direction X, so that the first direction X, the second direction Y, and the third direction Z are perpendicular to each other, which facilitates the provision of structures such as the buffer portion 302 in the protective plate 30.

In some embodiments, as shown in FIG. 4, the protective plate 30 is provided with reinforcing ribs 303, and the reinforcing ribs 303 are connected to two adjacent buffer portions 302.

The reinforcing rib 303 may be a convex rib structure for enhancing the structural strength of the protective plate 30, which may be disposed protruding from the surface of the protective plate 30. By disposing the reinforcing rib 303 in the gap between two adjacent buffer portions 302 and connecting it with two adjacent buffer portions 302, the reinforcing rib 303 can not only better strengthen the structure of the protective plate 30, but also enable the reinforcing rib 303 to fully utilize the space between two adjacent buffer portions 302.

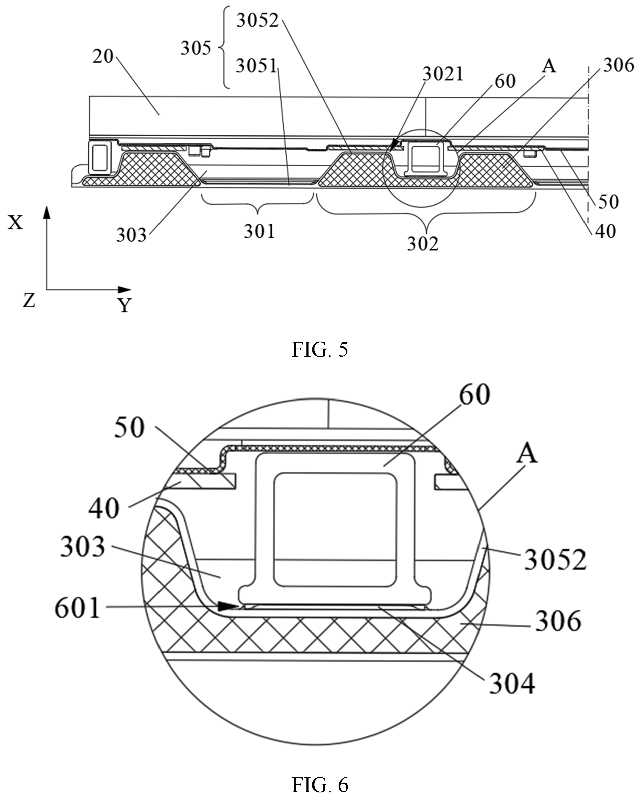

In some embodiments, as shown in FIG. 5, the battery 100 further includes a busbar member 40, and at least part of the busbar member 40 is located between the buffer portion 302 and the electrode terminal 201 and is connected to the electrode terminal 201.

The busbar member 40 may be a component for electrically connecting multiple battery cells 20. It is connected to the electrode terminals 201 of the multiple battery cells 20, so that the multiple battery cells 20 can be connected in series, parallel, or series-parallel, and the multiple battery cells 20 can output electric energy to the outside as an overall module. For example, the busbar member 40 may be a busbar, and the surface of the busbar is in contact with and is connected to the electrode terminal 201, so that the busbar member 40 can be firmly connected to the electrode terminal 201.

By disposing at least part of the busbar member 40 between the buffer portion 302 and the electrode terminal 201, the buffer portion 302 can abut against the busbar member 40, so that the busbar member 40 can enhance the structural strength of the contact position between the buffer portion 302 and the battery cell 20, which is beneficial to reducing the deformation at the electrode terminal 201 under impact, and is beneficial to improving the impact resistance of the battery 100, thereby improving the reliability of the battery 100.

In some embodiments, the battery 100 further includes an isolation plate 50. The isolation plate 50 is located on a side of the protective plate 30 facing the battery cell 20 and separates the battery cell 20 from the protective plate 30. The busbar member 40 is fixed to the isolation plate 50.

The isolation plate 50 may be a component in the battery 100 for separating components such as wiring harnesses and circuit boards from the battery cell 20. The isolation plate 50 is disposed on the side of the protective plate 30 facing the battery cell 20, so that the isolation plate 50 is located between the protective plate 30 and the battery cell 20. When the protective plate 30 is impacted and deformed, the buffer portion 302 can abut against the isolation plate 50, which can reduce the impact on the battery cell 20 and is beneficial to reducing the deformation of the battery cell 20.

By fixing the busbar member 40 to the isolation plate 50, the isolation plate 50 can support the busbar member 40, which is beneficial to enhancing the overall structural strength and helping to improve the impact resistance of the battery 100.

For example, the shell of the battery cell 20 and the busbar member 40 are respectively connected to two sides of the isolation plate 50. The electrode terminal 201 passes through the isolation plate 50 and is connected to the busbar member 40. Along the first direction X, the battery cell 20, the isolation plate 50, the busbar member 40, and the buffer portion 302 are disposed in sequence.

In some embodiments, as shown in FIG. 6, the battery 100 further includes a pressing strip 60, and the pressing strip 60 is connected between the protective plate 30 and the isolation plate 50.

The pressing strip 60 may be a strip-shaped component extending along the third direction Z. By connecting the pressing strip 60 between the protective plate 30 and the isolation plate 50, the protective plate 30 can support and fix the isolation plate 50 through the pressing strip 60, so that the battery 100 forms an overall structure.

For example, the pressing strip 60 may be provided as a hollow structure, which is beneficial to saving materials and helping to lighten the battery 100. In some embodiments, the pressing strip 60 may be made of rubber, so that the pressing strip 60 has a certain elasticity and can buffer the impact force transmitted from the protective plate 30 to the isolation plate 50.

In some embodiments, the pressing strip 60 is bonded to the protective plate 30.

The pressing strip 60 is connected to the protective plate 30 by bonding, so that the pressing strip 60 can be conveniently connected to the protective plate 30, which is beneficial to improving the assembly efficiency of the battery 100 and improving production efficiency.

For example, the pressing strip 60 is bonded to the protective plate 30 by adhesive glue. After the adhesive glue is cured, a glue layer can be formed between the protective plate 30 and the pressing strip 60, and the glue layer maintains the connection between the protective plate 30 and the pressing strip 60 by adhesive force.

In some embodiments, at least one buffer portion 302 includes at least two protrusion portions 3021, the at least two protrusion portions 3021 are spaced apart, and the pressing strip 60 is located in the gap between two adjacent protrusion portions 3021 in the buffer portion 302.

By making at least one buffer portion 302 include at least two protrusion portions 3021 and spacing the at least two protrusion portions 3021, a gap located between two adjacent protrusion portions 3021 is provided in at least one buffer portion 302. By disposing the pressing strip 60 in the gap between two adjacent protrusion portions 3021 in the buffer portion 302, the pressing strip 60 does not interfere with the reinforcing ribs 303, which facilitates the provision of the pressing strip 60.

In some embodiments, the surface of the protective plate 30 facing the isolation plate 50 is convexly provided with a glue limiting boss 304. The glue limiting boss 304 is located between two adjacent protrusion portions 3021 in the buffer portion 302 and abuts against the pressing strip 60, so that a glue accommodating gap 601 for accommodating adhesive glue is formed between the pressing strip 60 and the protective plate 30.

By disposing a glue limiting boss 304, protruding toward the isolation plate 50, between two adjacent protrusion portions 3021 in the buffer portion 302 of the protective plate 30, the pressing strip 60 abuts against the glue limiting boss 304 to form a glue accommodating gap 601 for accommodating adhesive glue between the pressing strip 60 and the protective plate 30. The glue layer is formed in the glue accommodating gap 601 and is formed by curing the adhesive glue in the glue accommodating gap 601.

The height of the glue limiting boss 304 protruding from the surface of the protective plate 30 can limit the thickness of the glue layer. For example, the height range of the glue limiting boss 304 protruding from the surface of the protective plate 30 can be set to 0.2 mm to 1.1 mm, so that the thickness range of the glue layer is 0.2 mm to 1.1 mm, so that the glue layer has sufficient thickness to firmly bond the pressing strip 60 and the protective plate 30, and can also reduce the waste of adhesive glue. In some embodiments, the height range of the glue limiting boss 304 protruding from the surface of the protective plate 30 can be set to 0.3 mm to 1 mm, so that the thickness range of the glue layer is 0.3 mm to 1 mm. The height of the glue limiting boss 304 protruding from the surface of the protective plate 30 can be 0.5 mm, 0.8 mm, or 1 mm, so that the glue layer has sufficient thickness to firmly bond the pressing strip 60 and the protective plate 30, and can also reduce the waste of adhesive glue.

For example, the glue limiting boss 304 can be made integrally with the protective plate 30 by a molding process, so that the glue limiting boss 304 is convenient to form.

In some embodiments, the battery 100 further includes a reinforcing beam 70, and the reinforcing beam 70 is connected to the protective plate 30 and the box 10.

The reinforcing beam 70 may be a beam body provided in the battery 100 for enhancing the structural strength of the battery 100. By disposing the reinforcing beam 70 in the accommodating space 103 and connecting the reinforcing beam 70 to the protective plate 30 and the box 10, the overall strength of the battery 100 can be enhanced.

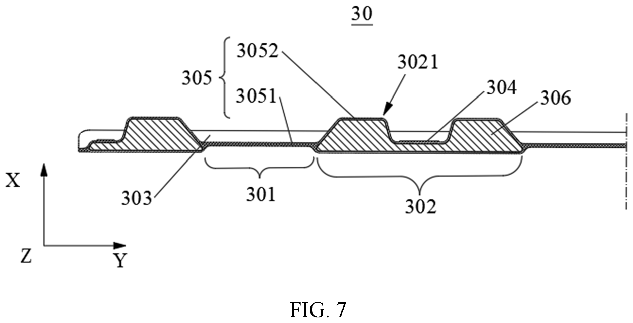

In some embodiments, as shown in FIG. 7, the protective plate 30 includes two plate bodies 305 and a buffer layer 306 disposed between the two plate bodies 305. The buffer layer 306 is an elastic structural layer, and the plate bodies 305 are composite material parts. The plate body 305 includes a connection region 3051 and a buffer region 3052. The connection regions 3051 of the two plate bodies 305 are stacked and connected. The buffer layer 306 is located between the buffer regions 3052 of the two plate bodies 305. The main body portion 301 includes the connection regions 3051 of the two plate bodies 305, and the buffer portion 302 includes the buffer regions 3052 of the two plate bodies 305 and the buffer layer 306.

The plate body 305 may be a plate-shaped structure of the protective plate 30 close to the side surface. The protective plate 30 is provided with plate bodies 305 on two side surfaces close to the thickness direction of the protective plate 30 itself, which can not only enhance the overall structural strength of the protective plate 30, but also facilitate the filling of buffer material between the two plate bodies 305 of the protective plate 30, which is beneficial to improving the performance of the protective plate 30.

The plate body 305 being a composite material part may mean that the plate body 305 is made of a composite material. The composite material may be a material formed by using a thermosetting resin as a matrix and adding continuous fibers thereinto, so that the plate body 305 has good impact resistance, which is beneficial to improving the protective capability of the protective plate 30.

The buffer layer 306 may be a structural layer provided in the protective plate 30 for buffering impact force. By sandwiching the buffer layer 306 between the two plate bodies 305, the buffer layer 306 can absorb the impact on the plate bodies 305, which is beneficial to reducing the impact force transmitted by the protective plate 30 to external components such as the isolation plate 50 and the busbar member 40.

The buffer layer 306 being an elastic structural layer may mean that the buffer layer 306 can undergo elastic deformation, so that the buffer layer 306 can absorb impact force by means of elastic deformation. For example, the buffer layer 306 may be made of foam plastic, so that the buffer layer 306 is not only light in weight but also has good absorption capacity for impact force. The buffer layer 306 may also be made of sponge, so that the buffer layer 306 has good elastic deformation capacity and can absorb impact force well.

The connection region 3051 and the buffer region 3052 refer to different regions of the plate body 305, which are connected to each other to form the overall structure of the plate body 305. The connection region 3051 is a region of the plate body 305 corresponding to the main body portion 301 of the protective plate 30. The connection regions 3051 of the two plate bodies 305 in the protective plate 30 are stacked and connected in the thickness direction of the protective plate 30 to form the main body portion 301 of the protective plate 30, so that the main body portion 301 has strong structural strength. The buffer region 3052 is a region of the plate body 305 corresponding to the buffer portion 302 of the protective plate 30. The buffer regions 3052 of the two plate bodies 305 in the protective plate 30 are stacked and spaced apart in the thickness direction of the protective plate 30, with a buffer layer 306 sandwiched between them. The buffer layer 306 and the buffer regions 3052 of the two plate bodies 305 form the buffer portion 302 of the protective plate 30, so that the buffer portion 302 has good buffering capacity.

In some embodiments, the two plate bodies 305 are of an integrally formed structure.

The two plate bodies 305 can be integrally formed by a molding process, so that the protective plate 30 has good structural integrity, which is beneficial to enhancing the structural strength of the protective plate 30. During the molding process of the protective plate 30, the buffer layer 306 can be placed in the mold for forming the protective plate 30 as an insert, so that the buffer layer 306 is directly formed between the two plate bodies 305, which makes the molding of the protective plate 30 convenient.

Some embodiments of this application also provide an electric apparatus, the electric apparatus includes the battery 100 provided by the above technical solution, and the battery 100 is configured to provide electric energy.

The electric apparatus may be any device or system that uses the battery 100 as described above.

According to the battery 100 provided in some embodiments of this application, the battery 100 includes a battery cell 20, a box 10, a protective plate 30, a busbar member 40, an isolation plate 50, a pressing strip 60, and a reinforcing beam 70. The battery cell 20 is disposed in the accommodating space 103 formed by the box 10. The battery cell 20, the isolation plate 50, the busbar member 40, and the protective plate 30 are sequentially disposed in the accommodating space 103 along the first direction X. The reinforcing beam 70 is located in the accommodating space 103 and is connected to the box 10 and the isolation plate 50. The electrode terminal 201 of the battery cell 20 passes through the isolation plate 50 and is connected to the busbar member 40. The busbar member 40 and the shell of the battery cell 20 are respectively connected to two sides of the isolation plate 50 in the first direction X. The protective plate 30 includes a main body portion 301 and a buffer portion 302 that are connected to each other. The buffer portion 302 protrudes from a side of the main body portion 301 facing the isolation plate 50 and is opposite to the busbar member 40 along the first direction X. The protective plate 30 includes two plate bodies 305 and a buffer layer 306 disposed between the two plate bodies 305. The connection regions 3051 of the two plate bodies 305 are stacked and connected to form the main body portion 301. The buffer regions 3052 of the two plate bodies 305 sandwich the buffer layer 306 to form the buffer portion 302. The buffer portion 302 includes at least two protrusion portions 3021 spaced apart. The pressing strip 60 is disposed in the gap between two adjacent protrusion portions 3021 in the buffer portion 302 and is connected to the isolation plate 50 and the protective plate 30.

Finally, it should be noted that the above embodiments are only used to illustrate the technical solutions of this application, rather than to limit it. Although this application has been described in detail with reference to the foregoing embodiments, those of ordinary skill in the art should understand that they can still modify the technical solutions recorded in the foregoing embodiments, or equivalently replace some or all of the technical features therein. However, these modifications or replacements do not cause the essence of the corresponding technical solutions to deviate from the scope of the technical solutions of the embodiments of this application, and they should all be covered by the scope of the claims and the specification of this application. In particular, as long as there is no structural conflict, the technical features mentioned in each embodiment can be combined in any way. This application is not limited to the specific embodiments disclosed in the text, but includes all technical solutions falling within the scope of the claims.

## Claims

1. A battery, comprising:
a battery cell, one side of the battery cell along a first direction being provided with an electrode terminal;
a box, provided with an accommodating space for accommodating the battery cell; and
a protective plate, disposed in the accommodating space and located on the side of the battery cell along the first direction, wherein the protective plate comprises a main body portion and a buffer portion that are connected to each other, and the buffer portion protrudes from a side of the main body portion facing the battery cell and is opposite to the electrode terminal along the first direction.

2. The battery according to claim 1, wherein the side of the battery cell along the first direction is provided with a pressure relief mechanism, and the pressure relief mechanism is opposite to the main body portion along the first direction.

3. The battery according to claim 1 or 2, wherein the protective plate comprises multiple buffer portions spaced apart along a second direction, and the second direction is perpendicular to the first direction; and
the side of the battery cell along the first direction is provided with a pressure relief mechanism, and the pressure relief mechanism corresponds to a gap between two adjacent buffer portions.

4. The battery according to any one of claims 1 to 3, wherein the protective plate is provided with reinforcing ribs, and the reinforcing ribs are connected to two adjacent buffer portions.

5. The battery according to any one of claims 1 to 4, wherein the battery further comprises a busbar member, and at least part of the busbar member is located between the buffer portion and the electrode terminal and is connected to the electrode terminal.

6. The battery according to claim 5, wherein the battery further comprises an isolation plate, and the isolation plate is located on a side of the protective plate facing the battery cell and separates the battery cell from the protective plate; and
the busbar member is fixed to the isolation plate.

7. The battery according to claim 6, wherein the battery further comprises a pressing strip, and the pressing strip is connected between the protective plate and the isolation plate.

8. The battery according to claim 7, wherein the pressing strip is bonded to the protective plate.

9. The battery according to claim 7 or 8, wherein at least one of the buffer portions comprises at least two protrusion portions, the at least two protrusion portions are spaced apart, and the pressing strip is located in a gap between two adjacent protrusion portions in the buffer portion.

10. The battery according to claim 9, wherein a surface of the protective plate facing the isolation plate is convexly provided with a glue limiting boss, and the glue limiting boss is located between two adjacent protrusion portions in the buffer portion and abuts against the pressing strip, so that a glue accommodating gap for accommodating adhesive glue is formed between the pressing strip and the protective plate.

11. The battery according to any one of claims 1 to 10, wherein the battery further comprises a reinforcing beam, and the reinforcing beam is connected to the protective plate and the box.

12. The battery according to any one of claims 1 to 11, wherein the protective plate comprises two plate bodies and a buffer layer disposed between the two plate bodies, the buffer layer is an elastic structural layer, and the plate bodies are composite material parts;
the plate body comprises a connection region and a buffer region, the connection regions of the two plate bodies are stacked and connected, and the buffer layer is located between the buffer regions of the two plate bodies; and
the main body portion comprises the connection regions of the two plate bodies, and the buffer portion comprises the buffer regions of the two plate bodies and the buffer layer.

13. The battery according to claim 12, wherein the two plate bodies are of an integrally formed structure.

14. An electric apparatus, comprising the battery according to any one of claims 1 to 13, wherein the battery is configured to provide electric energy.
